Europäisches Patentamt

European Patent Office

Office européen des brevets

(11) Veröffentlichungsnummer: **0 442 274 A1**

# (12) EUROPÄISCHE PATENTANMELDUNG

(21) Anmeldenummer: 91100488.5

(22) Anmeldetag: 17.01.91

(51) Int. Cl.5: **B62D  65/00**, B66F 7/22

(30) Priorität: 16.02.90 DE 4004853

(43) Veröffentlichungstag der Anmeldung:
21.08.91 Patentblatt  91/34

(84) Benannte Vertragsstaaten:
BE DE ES FR GB IT NL SE

(71) Anmelder: MERCEDES BENZ AG
Mercedesstrasse 137
W-7000 Stuttgart 60(DE)

Anmelder: AUMUND-FÖRDERERBAU GMBH
Postfach 12 61
W-4134 Rheinberg 1(DE)

(72) Erfinder: Binder, Manfred
Albert-Lortzing-Weg 1
W-7132 Illingen(DE)
Erfinder: Kübler, Fritz
Hauptstrasse 78
W-7042 Aidlingen(DE)
Erfinder: Herriegel, Dieter
Ahornstrasse 8
W-7534 Birkenfeld(DE)
Erfinder: Mechthold, Fritz, Dr.
Heinrich-Doergens-Strasse 9
W-4150 Krefeld(DE)

(54) Kipp- und Hubvorrichtung für Fahrzeugkarosserien zum ergonomisch günstigen Bereitstellen von Karosseriepartien bei der Serienmontage der Fahrzeuge.

(57) Die Erfindung betrifft eine Kipp- und Hubvorrichtung für Fahrzeugkarosserien (1) zum ergonomisch günstigen Bereitstellen von Karosseriepartien bei der Serienmontage der Fahrzeuge. Diese Vorrichtung weist eine gesonderte Kippvorrichtung (17) und eine davon unabhängig betätigbare Hubvorrichtung auf. Die Kippvorrichtung (17) ist im wesentlichen gebildet durch einen Schwenkrahmen (5), der kippseitig auf einem Paar von horizontal verlaufenden Führungsbahnen (10) und hubseitig auf zwei vertikal verlaufenden Hubsäulen (13) schwenkbar geführt ist. Die Fahrzeugkarosserie (1) ist starr und im Abstand auf diesem möglichst flach gestalteten Schwenkrahmen (5) befestigt. Zum Anheben dieser Kippvorrichtung (17) sind unterhalb von ihr zwei Hubscheren (18) angebracht. Die gesamte Anordnung zum unabhängigen Heben und Senken bzw. Kippen der Karosserie (1) ist auf einer rechteckigen, ebenen und begehbaren Plattform (20) angebracht, die - im Grundriß - die Fahrzeugkarosserie (1) um eine Arbeitsgangbreite überragt.

Die Erfindung betrifft eine Kipp- und Hubvorrichtung für Fahrzeugkarosserien zum ergonomisch günstigen Bereitstellen von Karosseriepartien bei der Serienmontage der Fahrzeuge nach dem Oberbegriff von Anspruch 1, wie sie beispielsweise aus der DE-OS 33 39 371 als bekannt hervorgeht.

Bei der bekannten Kipp- und Hubvorrichtung für Fahrzeugkarosserien wird diese zunächst gekippt bis in eine Stellung, in der der Karosserieboden über die Vertikalstellung hinaus leicht rückwärtig geneigt nach oben ragt; ein Anheben der Karosserie ist nur in dieser gekippten Stellung möglich. Der Schwenkrahmen überragt vorne und hinten die Fahrzeugkarosserie und ragt mit Rollen in zum Schwenkrahmen hin offene Führungsprofile hinein, wobei die horizontale Führungsbahn bogenförmig in die vertikale Führungsbahn übergeht. Die bekannte Kipp- und Hubvorrichtung ist ortsfest neben einer Montagelinie für Kraftfahrzeuge angeordnet; die zu einer Behandlung in der Vorrichtung vorgesehenen Fahrzeugkarosserien werden bedarfsweise seitlich aus dem vorbeilaufenden Förderstrom von Fahrzeugkarosserien in die Vorrichtung hereingezogen. Vermutlich sind mehrere derartige Kipp- und Hubvorrichtungen in Vorbeilaufrichtung der Fahrzeugkarosserien hintereinander als Parallelarbeitsplätze angeordnet. Nachteilig an der bekannten Arbeitsplatzgestaltung ist, daß die bekannte Kipp- und Hubvorrichtung nur für einzelne Montagevorgänge vorgesehen ist und das Fahrzeug für die übrigen Montagevorgänge in einer bodennahen Horizontalposition verbleibt, die keineswegs für alle Montagevorgänge ergonomisch optimal ist.

Aufgabe der Erfindung ist es, ausgehend von der gattungsgemäß zugrundegelegten Kipp- und Hubvorrichtung diese dahingehend weiter auszugestalten, daß bei allen Montagevorgängen eine für den jeweiligen Montagevorgang ergonomisch optimale Position der Fahrzeugkarosserie eingestellt werden kann.

Diese Aufgabe wird erfindungsgemäß durch die kennzeichnenden Merkmale gelöst. Dank der Möglichkeit, die Fahrzeugkarosserie unabhängig voneinander kippen oder anheben bzw. absenken zu können und dank der verfahrbaren Anordnung der Kipp- und Hubvorrichtung auf einer Plattform ist es möglich, das Fahrzeug während der gesamten Montagezeit auf der Kipp- und Hubvorrichtung zu belassen und gemeinsam mit dem zu montierenden Fahrzeug durch die Montagelinie langsam hindurchzubefördern. Für bodennahe Montagevorgänge auch im Innenbereich ist eine angehobene Arbeitsposition günstig; bei weit im Fahrzeuginnern liegenden bodennahen Montagevorgängen kann hingegen eine angehobene und gekippte Stellung günstiger sein. Bei Montagevorgängen auf der Fahrzeugunterseite kann je nach Lage des Montageortes eine horizontale angehobene, eine gekippte abgesenkte oder eine gekippte angehobene Position optimal sein. Alle diese Stellungen sind unabhängig voneinander ohne weiteres mit der erfindungsgemäßen Kipp- und Hubvorrichtung realisierbar.

Zweckmäßige Ausgestaltungen der Erfindung können den Unteransprüchen entnommen werden. Im übrigen ist die Erfindung anhand eines in den Zeichnungen dargestellten Ausführungsbeispieles nachfolgend noch erläutert; dabei zeigen:

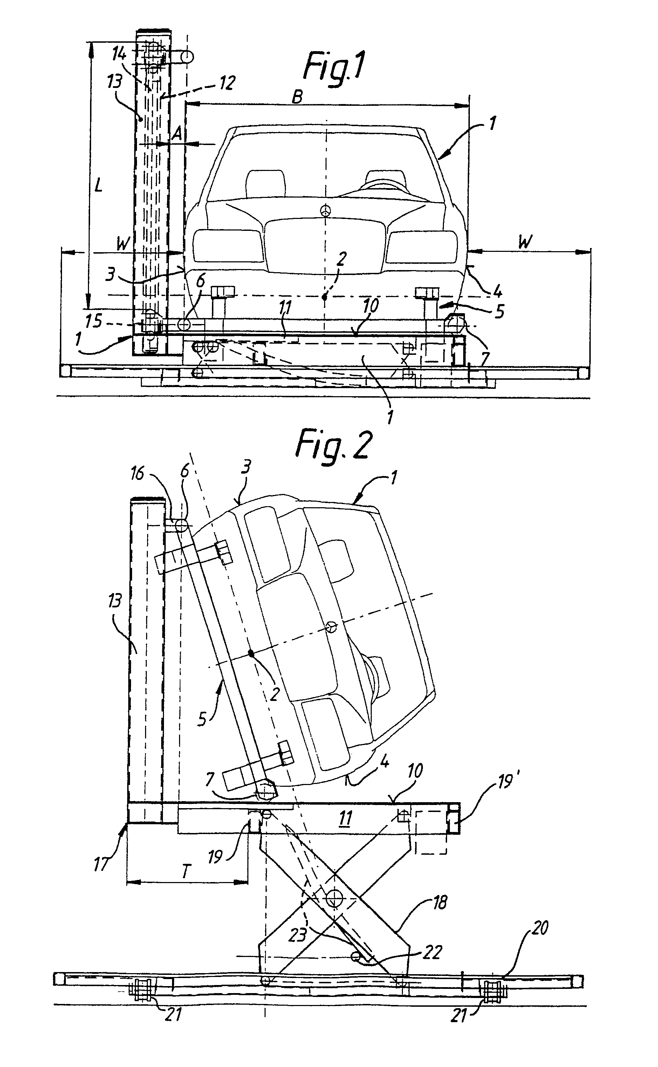

Figur 1     eine Vorderansicht eines Ausführungsbeispieles einer Kipp und Hubvorrichtung in abgesenkter Stellung,

Figur 2     eine Vorderansicht der gleichen Kipp- und Hubvorrichtung in hochgekipptem und angehobenem Zustand der Fahrzeugkarosserie,

Figur 3     eine Seitenansicht der Kipp- und Hubvorrichtung in abgesenktem Zustand wie bei Figur 1 und

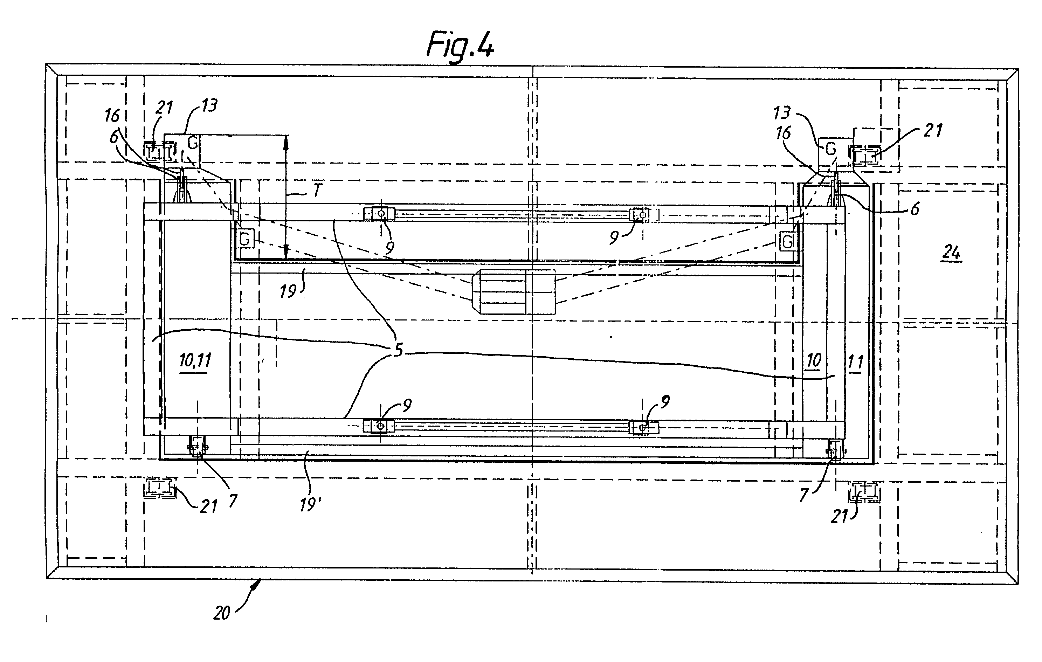

Figur 4     eine Grundrißdarstellung der Kipp- und Hubvorrichtung in abgesenkter Stellung.

Die in den Figuren dargestellte Kipp- und Hubvorrichtung dient zur ergonomisch günstigen Bereitstellung von Fahrzeugkarosserien 1 bei der Serienmontage der Fahrzeuge. Die Fahrzeugkarosserie 1 ist mit ihrer Längsachse 2 parallel zur Richtung der Verfahrbarkeit einer Plattform 20 auf der Kipp- und Hubvorrichtung angeordnet. Die Plattform 20 ist beim dargestellten Ausführungsbeispiel auf Rollen 21 auf bodenverlegten Schienen abrollbar. Auf der Plattform 20 sind im Bereich der Rollen 21 zwei Hubscheren 18 angeordnet, die ihrerseits oberseitig die horizontalen Träger 11 einer Kippvorrichtung 17 aufnehmen. Die Kippvorrichtung ihrerseits enthält einen Schwenkrahmen 5, der schließlich die Fahrzeugkarosserie haltert. Beim Kippvorgang der Fahrzeugkarosserie 1 wird die eine Seite des Schwenkrahmens 5 bzw. der Fahrzeugkarosserie 1 angehoben, weshalb diese Seite als Hubseite 3 bezeichnet werden soll; die gegenüberliegende Seite wird im wesentlichen gekippt, weshalb diese Seite als Kippseite 4 bezeichnet werden soll.

Die wesentlichen bereits aufgezählten Komponenten der Kipp- und Hubvorrichtung sind folgendermaßen aufgebaut: der Schwenkrahmen 5 ist möglichst flach ausgebildet und im Abstand a zum Karosserieboden über Abstandshalter 9 mit diesem starr befestigt. Durch die Abstandsanordnung zum Karosserieboden soll die Zugänglichkeit zum Karosserieboden möglichst wenig durch den Schwenkrahmen 5 behindert werden. Um in der abgesenkten Stellung der Fahrzeugkarosserie eine möglichst niedrige Karosseriestellung einstellen zu können, ist der Schwenkrahmen 5 im Bereich der später noch näher zu erörternden horizontalen Träger 11 mit Abkröpfungen 8 versehen, so daß der Schwenkrahmen 5 zwischen die beiden horizontalen, quer zur Fahrzeuglängsachse 2 verlaufenden Träger 11 hinein abgesenkt werden kann. Der Schwenkrahmen 5 selber ist im Grundriß im wesentlichen als Rechteckrahmen ausgebildet, so daß die Unterseite der Fahrzeugkarosserie möglichst ungehindert zugänglich ist. Auf der Kippseite 4 des Schwenkrahmens 5 trägt dieser im Bereich der bereits erwähnten horizontalen Träger 11 jeweils eine exponiert angeordnete Rolle 7, mit der der Schwenkrahmen 5 auf einer horizontalen Führungsbahn 10 abrollen kann, die oberseitig auf dem horizontalen Träger 11 gebildet ist. Dadurch ist der Schwenkrahmen 5 in einfacher Weise auf dem horizontalen Träger 11 schwenkbar geführt. Im Bereich der Hubseite 3 ist der Schwenkrahmen 5 in einem Paar von vertikal stehenden Führungsbahnen 12 im Innern einer Führungssäule 13 schwenkbar geführt. Und zwar ist die Führungssäule 13 als ein im Querschnitt nahezu geschlossener längsgeschlitzter Führungskanal ausgebildet, in welchem ein Schuh 15 axial geführt ist. Der Schuh 15 ragt mit einer Konsole 16 durch den Längsschlitz hindurch in Richtung zum Schwenkrahmen 5 und trägt dort ein Schwenkgelenk 6, an welchem die Konsole 16 schwenkbar mit dem Schwenkrahmen 5 verbunden ist. Die Führungssäule 13 weist einen seitlichen Abstand A zur Hubseite 3 der Fahrzeugkarosserie 1 auf, so daß auch in diesem Bereich die Fahrzeugkarosserie bei horizontaler Stellung ohne weiteres zugänglich ist. An dem Schuh 15 greift im Innern des Führungskanales jeweils ein Hubmittel an, das beim dargestellten Ausführungsbeispiel als eine Hubspindel 14 ausgebildet ist. Dank dieser offenliegenden Anlenkung des Schwenkrahmens 5 an die horizontale bzw. die vertikale Führungsbahn 10 bzw. 12 kann der Karosserie-angepaßte Schwenkrahmen 5 auch leicht an der Kippvorrichtung 17 ausgetauscht werden. Im Bereich der horizontalen Führungsbahn liegt er lediglich mit der Rolle 7 lose auf. Am Schwenkgelenk 6 ist er lediglich mit einem u. U. axial abziehbaren Schwenkzapfen mit der Konsole 16 verbunden. Bedarfsweise kann die Kippvorrichtung 17 also rasch mit einem an eine andere Karosserie angepaßten Schwenkrahmen 5 ausgestattet werden. Es ist sogar denkbar, daß bei einer entsprechenden leicht austauschbaren Gestaltung des Schwenkgelenkes 6 ein sogenannter Mischbetrieb bei der Endmontage auf einer Reihe von Kipp- und Hubvorrichtungen mit unterschiedlichen Schwenkrahmen 5 und entsprechend unterschiedlichen Fahrzeugkarosserien durchgeführt werden kann. In einem vorbereitenden Schritt werden zusammengehörige Schwenkrahmen und Fahrzeugkarosserien zusammengeführt und in die Kipp- und Hubvorrichtung eingebracht.

Um in gewünschter Weise die Fahrzeugkarosserie 1 unabhängig von der Hubbewegung kippen zu können, sind die beiden horizontalen Träger 11 und die beiden vertikalen Führungssäulen 13 sowie die zugehörigen Hubmittel in einer eigensteifen und den auftretenden Belastungen für sich standhaltenden beweglichen Kippvorrichtung 17 integriert. Dabei ragen die vertikalen Führungssäulen 13 frei nach oben von der Kippvorrichtung 17 ab, wobei deren Führungsbahnlänge L maximal der Karosseriebreite B entspricht. Beim dargestellten Ausführungsbeispiel ist die Führungsbahnlänge sogar geringer als die Karosseriebreite, weil die Karosserie nicht bis in die Vertikalstellung des Karosseriebodens hochgekippt werden darf. In der Karosserie ist nämlich bereits der Antriebsmotor des Fahrzeuges eingebaut, der mit Rücksicht auf die Ölfüllung nur eine maximale Kippstellung bis 75° verträgt, ohne daß Öl ausläuft. Auch die 75°-Stellung erlaubt eine gute Zugänglichkeit der Fahrzeugungerseite. Dank der relativ kurzen Bemessung der vertikalen Führungssäule 13 kann diese auch ohne oberseitige Abstützung, d. h. in frei abragender Bauweise relativ steif gehalten werden. Aus Kostengründen wird man für die vertikalen Führungssäulen 13 marktübliche Hubsäulen von Fahrzeughebebühnen verwenden und in die Kippvorrichtung 17 integrieren.

Von den beiden horizontalen und vertikalen Trägern 11 bzw. Führungssäulen 13 ist je ein horizontaler Träger 11 und je eine vertikale Führungssäule 13 in Fahrzeuglängsrichtung etwa lagegleich angeordnet, wobei die beiden erwähnten Teile zu einem starren Winkel miteinander verbunden sind. Beide solcherart gebildeten Winkel sind beim dargestellten Ausführungsbeispiel durch zwei in Fahrzeuglängsrichtung verlaufende Verbindungsträger 19 und 19' im Bereich der horizontalen Träger 11 miteinander verbunden, wodurch die in sich eigensteife Kippvorrichtung 17 gebildet ist. Der hubseitig liegende Verbindungsträger 19 ist gegenüber der Hubseite 3 der Kippvorrichtung 17 um ein Maß T zurückversetzt, um möglichst ungehindert an die hochgekippte und angehobene Karosserie bodenseitig herantreten zu können. Die beiden horizontalen Träger 11 sind also hubseitig auf der Tiefe T völlig einbaufrei gehalten. Diese Zugangstiefe entspricht etwa 25 - 40 % der Karosseriebreite B.

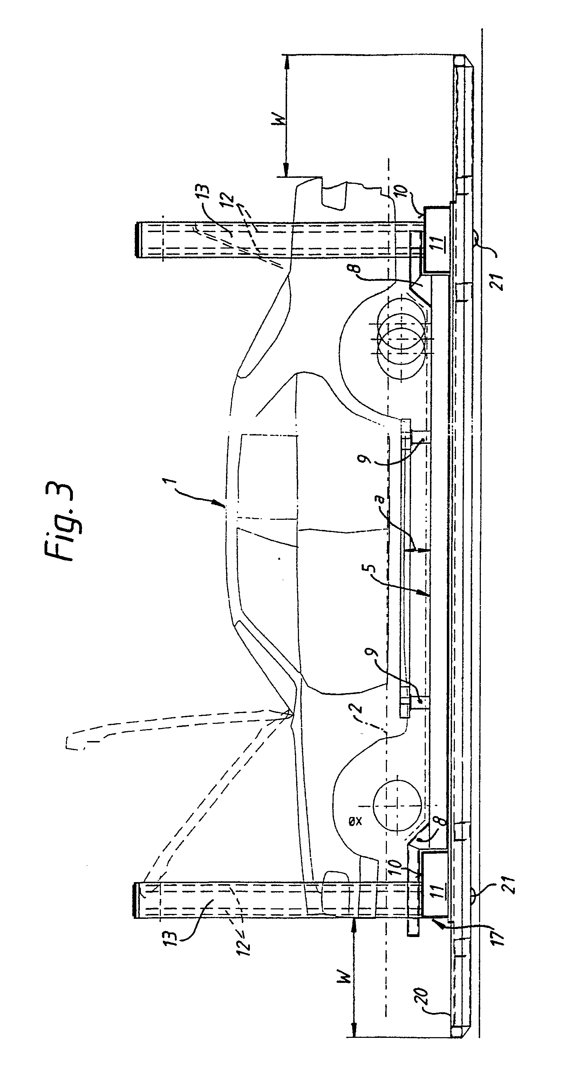

Erste Erfahrungen mit einem Prototypen einer Kipp- und Hubvorrichtung haben jedoch gezeigt, daß der kippseitige Längsträger 19' auch ganz entbehrlich ist, was die Zugänglichkeit zu der Karosserie von ihrer Kippseite 4 her wesentlich verbessert. Der verbleibende Träger 19 dient lediglich dazu, die beiden oben erwähnten Winkel aus Träger 11 und Führungssäule 13 in Längsrichtung gegen Verkippen gegeneinander zu versteifen, damit die beiden Winkel - in Seitenansicht gemäß Figur 3 gesehen - sich nicht in Fahrzeuglängsrichtung neigen können. Allerdings leisten in dieser Hinsicht auch die Hubscheren 18 einen Beitrag aufgrund einer gewissen Führungsbreite einer jeden Hubschere in Fahrzeuglängsrichtung. Auch gegen ein gegenseitiges Verdrillen der beiden Winkel 11/13 bietet der Längsträger 19 einen gewissen Schutz, jedoch sind die Winkel 11/13 diesbezüglich dank der synchron angetriebenen und eine gute Parallelführung bewirkenden Hubscheren 18 wenig gefährdet. Außer der gegenseitigen Stabilisierung der beiden Winkel 11/13 dient der Längsträger 19 auch zur platzsparenden und geschützten Aufnahme des Antriebes für die Hubsäulen 13 und einer Synchronisationswelle zwischen beiden, die unter Zwischenschaltung je eines Winkelgetriebes einen exakten Gleichlauf beider Hubsäulen 13 sicherstellt.

Zwischen der Kippvorrichtung 17 und der Plattform 20 sind - in Fahrzeuglängsrichtung versetzt - die beiden erwähnten Hubscheren 18 zum Anheben der Kippvorrichtung 17 vorgesehen. Die beiden horizontalen Träger 11 mit den beiden in Längsrichtung verlaufenden Verbindungsträgern 19 und 19' sind durch die beiden Hubscheren 18 wie ein Scherenhubtisch anhebbar bzw. absenkbar. Im Grundriß liegen die beiden Hubscheren 18 lagegleich mit den beiden horizontalen Trägern 11. Diese sind bereichsweise nach unten offen ausgebildet und weisen in diesem Bereich einen Uförmigen Querschnitt auf, so daß sie in platzsparender Weise jeweils eine Hubschere 18 aufnehmen können. Diese im Grundriß lagegleiche Unterbringung der Hubscheren mit den horizontalen Trägern 11 hat nicht nur Platzgründe, sondern auch statische Gründe; bei dieser Anordnung sind die Kraftflußwege am einfachsten und am kürzesten und aus diesem Grunde auch optimal belastbar. Zum Schutz gegen Berührung sind beiderseits neben jeder Hubschere und an den Schmalseiten jeweils vertikal verlaufende, zieharmonikaartige Faltenbälge angeordnet, was jedoch nicht gezeigt ist.

Um die Kippvorrichtung 17 möglichst niedrig bis auf die Plattform 20 absenken zu können, damit auch der Dachbereich der Fahrzeugkarosserie gut zugänglich ist, werden von den bekannten Hubscherentypen solche Hubscheren verwendet, die ohne oberseitig oder unterseitig überstehende Teile auch aus einer besonders niedrig eingefahrenen Flachlage heraus unter Last anhebbar sind. Derartige Hubscheren können als einbaufertige Aggretate auf dem Merkt bezogen werden. An Literatur sei in diesem Zusammenhang beispielsweise die EP-OS 252 086 oder die DE-AS 11 75 852 erwähnt. Bei der im vorliegenden Ausführungsbeispiel angedeuteten Hubschere ist auf dem einen Scherenhebel eine Führungsbahn 23 für eine Spreizrolle angebracht, die in der Flachlage der beiden Scherenhebel mit einer ortsfesten Gegenbahn einen sehr spitzwinkligen Spreizzwickel bildet, in den eine horizontal geführte Spreizrolle 22 hineingedrückt werden kann. Auf diese Weise kann die Hubschere auch unter Last aus einer extremen Flachlage heraus angehoben werden, ohne daß oberseitig oder unterseitig überstehende Teile erforderlich wären. Die beiden Hubscheren sind untereinander synchron angetrieben, wobei der oder die Antriebe in der Plattform 20 untergebracht sind. Zweckmäßigerweise wird auch hier der Gleichlauf über eine Synchronisationswelle erzwungen.

Um Montagevorgänge bei langsam voranbewegter Plattform bzw. Fahrzeugkarosserie auch im Stillstand der Arteiter durchführen zu können, überragt die Plattform 20 im Grundriß allseits die Fahrzeugkarosserie 1 um ein Maß W, welches ausreichend breit ist, daß mann allseits bequem um die Fahrzeugkarosserie 1 herumgehen kann. Der Werker ist dann nicht genötigt, während der Ausübung seiner Montagetätigkeit mit der Fahrzeugkarosserie mitzugehen, sondern kann seine Arbeit im Stillstand ausüben. Mehrere aneinander anschließende und gemeinsam auf einer Förderstrecke beförderte Plattformen bilden eine durchgehende, sich bewegende Standfläche. Zur Vermeidung einer Stufe am längsseitigen Rand der Plattformen sind dort großflächige Podeste von der Höhe der Plattform aufgestellt, so daß insgesamt eine ebene begehbare Fläche mit einem sich bewegenden Mittelstreifen im Bereich der Kipp- und Hubvorrichtungen ebildet ist. Beim dargestellten Ausführungsbeispiel ist die Plattform über Rollen 21 auf bodenverlegten Schienen verfahrbar, wobei die Reihe von Plattformen als Block durch die Montagelinie hindurchgedrückt wird. Zu Beginn der Montagelinie wird jeweils eine neue Plattform bedarfsweise angesetzt und in die Reihe hineingedrückt; am Ende der Montagelinie wird jeweils die letzte, abgebremste Plattform abgenommen, seitlich versetzt und in eine entgegengerichtet durchlaufene, parallel liegende Montagelinie überführt, so daß sich ein geschlossener Kreislauf von Plattformen ergibt. Anstelle einer Horizontalführung der Plattform auf integrierten Rollen ist es auch denkbar, die Plattform ohne Rollen, aber unterseitig mit Führungsschienen auszubilden, die ihrerseits auf einer Reihe von bodenverlegten Tragrollen laufen.

Die Energieversorgung zur Speisung der Kipp- und Hubantriebe geschieht über bodenverlegte, geschützt angeordnete Kontaktbahnen, in die plattformseitige Schleifkontakte eingreifen. In dem weniger stark belasteten Bereich W des Arbeitsganges um die Fahrzeugkarosserie herum kann die Profilhöhe der tragenden Querschnitte geringer sein als im mittleren Bereich der Plattform. In dem Randbereich ist unterseitig rechts und links jeweils ein durchgehender, für eine Mehrfachanordnung von bodenseitigen Kontaktbahnen ausreichend hoher Freiraum vorhanden, so daß an diesen Stellen jeweils vier Kontaktbahnen übereinanderliegend angeordnet sein können. Von den insgesamt acht Kontaktbahnen sind vier für die Drehstromversorgung und vier weitere für Steuerzwecke vorgesehen. In einem der Gefache 24 des fachwerkartig aufgebauten Rahmens der Plattform 19 kann ein Schaltschrank zur Unterbringung von Steuerteilen für die Antriebsmotoren usw. angeordnet werden.

**Patentansprüche**

1. Kipp- und Hubvorrichtung für Fahrzeugkarosserien zum ergonomisch günstigen Bereitstellen von Karosseriepartien bei der Serienmontage der Fahrzeuge, mit der eine seitliche Außenfläche - Hubseite - der Fahrzeugkarosserie heb- und senkbar und die andere seitliche Außenfläche - Kippseite - dem Untergrund zu kippbar ist,
   - mit einem im Abstand annähernd parallel zum Boden der Fahrzeugkarosserie und starr mit ihr befestigbarem, flachem Schwenkrahmen,
   - der Schwenkrahmen ist mit seiner - im Grundriß - nahe bei der Kippseite der Fahrzeugkarosserie liegenden Seite in einem Paar von horizontal unterhalb des Fahrzeuges quer zur Fahzeuglängsachse verlaufenden Führungsbahnen schwenkbar geführt,
   - der Schwenkrahmen ist ferner mit seiner - im Grundriß - nahe bei der Hubseite der Fahrzeugkarosserie liegende Seite in einem Paar von wenigstens annähernd vertikal im Abstand neben der Fahrzeugkarosserie stehenden Führungsbahnen schwenkbar geführt und mittels in den Führungsbahnen am Schwenkrahmen angreifender Hubmittel heb- und senkbar,
   **gekennzeichnet,** durch die Gemeinsamkeit folgender Merkmale:
      a) die beiden horizontalen und die beiden vertikalen Führungsbahnen (10, 12) sowie die zugehörigen Hubmittel (14) sind in einer für sich beweglichen Kippvorrichtung (17) integriert;
      b) die vertikalen Führungsbahnen (12) sind in frei nach oben abragenden Führungssäulen (13) untergebracht, deren Führungsbahnlänge (L) maximal der Karosseriebreite (B) entspricht;
      c) die Kippvorrichtung (17) ist unterseitig mit einem Paar von Hubscheren (18) nach Art eines Scherenhubtisches versehen, wobei die Hubscheren (18) derart ausgebildet sind, daß ohne oberseitig oder unterseitig überstehende Teile die Kippvorrichtung (17) unter Last aus besonders niedriger Flachlage heraus anhebbar sind;
      d) die Kippvorrichtung (17) ist im Bereich zwischen den endseitig liegenden, horizontalen Führungsbahnen (10) für einen ungehinderten Zugang zur hochgekippten Fahrzeugkarosserie (1) wenigstens von der Hubseite (3) her auf einer quer zur Fahrzeuglängsachse (2) gemessenen Tiefe (T) von 25 - 40 % der Karosseriebreite (B) einbaufrei gehalten (Seitenversatz des Verbindungsträgers 19);
      e) die beiden Hubscheren (18) sind auf einer flachen, oberseitig zumindest im Randbereich ebenen und begehbaren, im Grundriß rechteckigen Plattform (20) angeordnet, die im Grundriß allseits die Fahrzeugkarosserie (1) überragt (Maß W) und verfahrbar (Rollen 21) ausgebildet ist.

2. Kipp- und Hubvorrichtung nach Anspruch 1,
   **dadurch gekennzeichnet,**
   daß die kippseitige schwenkbare Führung des Schwenkrahmens (5) auf den beiden horizontalen Führungsbahnen (10) durch je eine exponiert entlang der Kippseite (4) des schwenkrahmens (5) angebrachte Rolle (7) und durch einen oberseitig flachen, im Querschnitt rechtekkigen Träger (11) als Führungsbahn (10) ausgebildet ist.

3. Kipp- und Hubvorrichtung nach Anspruch 1 oder 2,
   **dadurch gekennzeichnet,**
   daß die hubseitige, schwenkbare Führung des Schwenkrahmens (5) in den beiden vertikalen Führungsbahnen (12) je einen in einem nahezu geschlossenen, längsgeschlitzten Führungskanal geführten Schuh (15) mit einer durch den Längsschlitz in Richtung zum Schwenkrahmen (5) ragenden Konsole (16) enthält, wobei der Schwenkrahmen (5) hubseitig am Außenende der Konsole (16) schwenkbar angelenkt ist (Schwenkgelenk 6).

4. Kipp- und Hubvorrichtung nach Anspruch 2 oder 3,
   **dadurch gekennzeichnet,**
   daß der im Querschnitt rechteckige, oberseitig die horizontale Führungsbahn (10) bildende Träger (11) unterseitig bereichsweise offen und in diesem Bereich im wesentlichen U-förmig profiliert ist und die Hubscheren (18) darin aufnimmt.

5. Kipp- und Hubvorrichtung nach einem der Ansprüche 2 bis 4,

**dadurch gekennzeichnet,**
daß je ein die horizontale Führungsbahn (10) bildender Träger (11), je eine vertikale Führungssäule (13) und je eine Hubschere (18) - bezogen auf die Fahrzeuglängsrichtung (2) - etwa lagegleich angeordnet sind, wobei der horizontale Träger (11) und die vertikale Führungssäule (13) zu einem starren Winkel miteinander verbunden sind und beide Winkel durch einen oder höchstens zwei in Längsrichtung verlaufende(n) Verbindungsträger (19, 19') im Bereich der horizontalen Träger (11) miteinander verbunden sind.

6. Kipp- und Hubvorrichtung nach einem der Ansprüche 2 bis 5,
**dadurch gekennzeichnet,**
daß die vertikalen Führungssäulen (13) baugleich wie marktübliche Hubsäulen von Fahrzeughebebühenen ausgebildet sind.

Fig.1

Fig. 2

Fig. 3

*Fig.4*

EP 0 442 274 A1

**Europäisches Patentamt**

# EUROPÄISCHER RECHERCHENBERICHT

Nummer der Anmeldung

## EP 91 10 0488

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-3 923 296   (A. F. OKSALA ET AL.)<br>* Spalte 1, Zeile 46 - Spalte 2, Zeile 61; Figuren 1, 2 *<br>– – – | 1 | B 62 D 65/00<br>B 66 F 7/22 |
| A | DE-B-1 004 782   (J. J. NEUTEBOOM)<br>* Spalte 2, Zeile 33 - Spalte 4, Zeile 35; Figuren 1-4 *<br>– – – – – | 1 | |

RECHERCHIERTE SACHGEBIETE (Int. Cl.5)

B 62 D
B 66 F
B 65 G
B 60 S

Der vorliegende Recherchenbericht wurde für alle Patentansprüche erstellt

| Recherchenort | Abschlußdatum der Recherche | Prüfer |
|---|---|---|
| Den Haag | 21 Mai 91 | CHLOSTA P. |